# EUROPEAN PATENT APPLICATION

(11) **EP 2 680 526 A1**
(43) Date of publication of application: **01.01.2014**
(21) Application number: 12197346.5
(22) Date of filing: 14.12.2012
(51) Int. Cl.: H04L 29/06, H04W 12/08

(54) **Methods and devices for establishing trust on first use for close proximity communications**

(30) Priority: 26.06.2012 US 201261664725 P
(71) Applicant: Certicom Corp., Mississauga, Ontario L4W 0B5 (CA)
(72) Inventor: Rosati, Anthony, Ottawa, Ontario K1S 4T5 (CA); Campagna, Matthew John, Ridgefield, CT 06877 (US); Zaverucha, Gregory Marc, Redmond, WA 98052 (US)
(74) Representative: Noble, Nicholas

(57) **Abstract**

Methods and devices for establishing trust on first use for close proximity communications are disclosed. An example method includes establishing a close proximity communications connection with a device, receiving a public key from the device via the close proximity communications connection, obtaining, via a user interface, an indication that the device is trusted, and storing at least one of the public key or an identifier for the device.

## Description

### RELATED APPLICATIONS

This patent claims priority to U.S. Provisional Application No. 61/664,725, filed on June 26, 2012, the entirety of which is hereby incorporated by reference.

### FIELD OF THE DISCLOSURE

This disclosure relates generally to close-proximity communications and, more particularly, to methods and devices for establishing trust on first use for close proximity communications.

### BACKGROUND

Close-proximity communications, such as near field communications, enable convenient transfers of data by bringing devices into proximity. Transferrable data may include contact information such as phone numbers and addresses, media such as photos or songs, and other information such as web links or web pages.

### BRIEF DESCRIPTION OF THE DRAWINGS

FIG. 1 is a block diagram of an example system for establishing trust on first use for near field communications.

FIG. 2 is a diagram of an example mobile device for use in the system of FIG. 1.

FIG. 3 illustrates a known process for establishing near field communications.

FIG. 4 illustrates a man-in-the-middle attack by which the security of the process of FIG. 3 may be compromised.

FIG. 5 illustrates an example process for establishing trust on first use for near field communications.

FIG. 6 illustrates an example user interface for verifying that a mobile device is trusted.

FIG. 7 is a flowchart representative of an example method to establish trust on first use for near field communications.

FIG. 8 is a flowchart representative of an example method to establish near field communications after trust has been established between two devices.

FIG. 9 is a flowcharts representative of another example method to establish near field communications after trust has been established between two devices.

FIG. 10 is a flowchart representative of an example method to send and receive trusted connections to and from a server.

FIG. 11 illustrates an example process for establishing trust for near field communications.

FIG. 12 is a flowchart representative of another example method to establish trust on first use for near field communications.

FIG. 13 is a flowchart representative of another example method to establish near field communications after trust has been established between two devices.

### DETAILED DESCRIPTION

Example methods and devices for establishing trust on first use (TOFU) for close proximity communications, are disclosed herein. In some examples, two users, having respective mobile devices, seek to establish a secure NFC connection between their mobile devices. The users "tap" their devices together (e.g., bring the devices into close proximity or make actual contact), at which time their devices exchange respective keys. Each of the example mobile devices then requests (e.g., via a user interface) that their respective users acknowledge or verify that the key or an identifier associated with the key is trusted. If the users acknowledge or verify the trust, each of the example mobile devices accepts the key received from the other mobile device as trusted and stores the key, the identifier, and/or a shared key calculated using the received key. For subsequently establishing secure NFC connections between mobile devices that have established trust, the keys exchanged between the mobile devices are used to verify trust, such as by looking up the exchanged key(s) and/or retrieving the stored identifiers and/or the shared key. The shared key is then used to exchange data between the mobile devices without further verification by the user (although there may be user verification for specific types of data transactions to occur).

Disclosed example apparatus include a processor, a close proximity communications module coupled to the processor; and a memory coupled to the processor and storing instructions. When executed by the processor, the example instructions cause the processor to obtain, via a user interface, an indication that a device is trusted, and store at least one of a public key or an identifier for the device, the public key being received from the device via a close proximity communications connection.

In some examples, the instructions are to further cause the processor to obtain a shared key based on the public key, the public key being received from the device via a second close proximity communications connection. In some such examples, the instructions are to cause the processor to obtain the shared key based on the identifier. In some example apparatus, the instructions are to further cause the processor to obtain verification that the identifier is trusted.

In some example apparatus, the instructions are to further cause the processor to, prior to obtaining the shared key based on the public key, verify that the public key is trusted by performing a lookup of the public key in a storage. In some examples, storing at least one of the public key or the identifier comprises storing the public key in association with the identifier. In some example apparatus, the instructions are to further cause the processor to determine a shared key based on the public key in response to obtaining the indication. In some example apparatus, the instructions are to further cause the processor to store a shared key in association with the at least one of the public key or the identifier.

In some examples, the instructions are to further cause the processor to obtain the identifier via the user interface. In some example apparatus, the instructions are to further cause the processor to obtain the identifier via the close proximity communications connection. In some examples, the instructions are to further cause the processor to send the at least one of the identifier or the public key to a server, and store at least one of a second identifier or a second public key received from the server, the at least one of the second identifier or the second public key corresponding to a second trusted device.

In some example apparatus, the instructions are to further cause the processor to store a first counter value associated with at least one of the identifier, a shared key, or the public key, compare the first counter value with a second counter value received from the device, perform a data transaction using the shared key based on the comparison, and store the second counter value received from the device. In some example apparatus, the close proximity communications connection comprises a near field communications connection. In some examples, the device comprises a mobile device.

Disclosed example methods include receiving a public key from a device via a close proximity communications connection, obtaining, via a user interface, an indication that the device is trusted, and storing at least one of the public key or an identifier for the device.

Some example methods further include receiving a public key from the device via a second close proximity communications connection, and obtaining a shared key based on the public key. In some such example methods obtaining the shared key is based on the identifier. Some such example methods further include obtaining verification that the identifier is trusted. Some example methods include verifying, prior to obtaining the shared key based on the public key, that the public key is trusted by performing a lookup of the public key in a storage.

In some example methods, storing at least one of the public key or the identifier comprises storing the public key in association with the identifier. Some examples further include determining a shared key based on the public key in response to obtaining the indication. Some such example methods further include storing the shared key in association with the at least one of the public key or the identifier.

Some example methods further include obtaining the identifier via the user interface. Some example methods further include obtaining the identifier via the close proximity communications connection. Some examples further include sending the at least one of the identifier or the public key to a server, and receiving at least one of a second identifier or a second public key from the server, the at least one of the second identifier or the second public key corresponding to a second trusted device.

Some example methods further include storing a first counter value associated with at least one of the identifier, a shared key, or the public key, receiving a second counter value from the device, comparing the first and second counter values, performing a data transaction using the shared key based on the comparison, and storing the second counter value in association with the at least one of the identifier, the shared key, or the public key. In some examples, the close proximity communications connection comprises a near field communications connection. In some examples, the device comprises a mobile device.

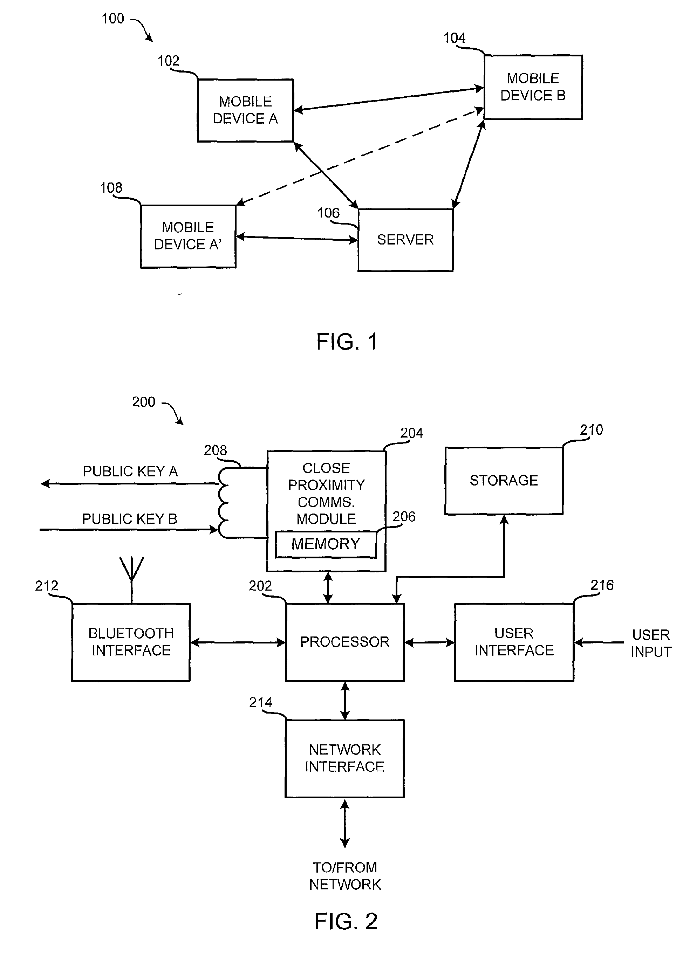

FIG. 1 is a block diagram of an example system 100 for establishing trust on first use for NFC communications. The example system 100 of FIG. 1 includes two mobile devices 102, 104. The mobile devices 102, 104 may communicate with each other via NFC communications as described in more detail below. In some examples, each of the mobile devices 102, 104 has a user (e.g., a primary user, a sole user, an owner, etc.). The users may use the example mobile devices 102, 104 to securely transfer data between the devices 102, 104. Depending on the functionality provided by the mobile devices 102, 104, the mobile devices 102, 104 may be any of a multiple-mode communication device configured for both data and voice communication, a mobile telephone, such as a smartphone, a wearable computer such as a watch, a tablet computer, a personal digital assistant (PDA), and/or a computer system such as a notebook, laptop or desktop system. The mobile devices 102, 104 may take other forms apart from those specifically listed above.

In some examples, the mobile devices 102, 104 establish a trust relationship on a first occasion or first use that the mobile devices 102, 104 are connected via NFC. As used herein, a trust relationship exists when both parties to an NFC transaction have verified that the other party is authentic (e.g., there is no attacker, such as a man-in-the-middle attacker). When a trust relationship is established between the mobile devices 102, 104, the example mobile device 102 may store a key, an identifier corresponding to the mobile device 104, and/or a shared key. Similarly, the example mobile device 104 stores a key, an identifier corresponding to the mobile device 102, and/or the shared key. When subsequently establishing NFC connections between the mobile devices 102, 104, the example mobile devices 102, 104 access the respective stored keys, identifiers and/or shared keys to determine that there is a trust relationship between the mobile devices 102, 104 and that the NFC connection is not subject to a man-in-the-middle attack.

As used herein, a public key refers to a non-secret key and a private key refers to a secret key. A shared key refers to a secret key known to the parties (e.g., devices) involved in a secure transaction.

The example system 100 of FIG. 1 further includes a server 106. The example server 106 may be an enterprise server or any other type of communications server. The example server 106 communicates with the mobile devices 102, 104 via any type(s) of wired and/or wireless communication methods. In the example of FIG. 1, the server 106 receives identifiers from the mobile devices 102, 104. For example, the server 106 may backup and/or synchronize trust relationships (e.g., sets of identifiers and public keys) that the mobile devices 102, 104 have established between the mobile devices 102, 104 and/or with other mobile devices. In some examples, the trust relationships (e.g., sets of identifiers and public keys) received by the server 106 from the first mobile device 102 are associated with a unique identification of the user or owner of the first mobile device 102 (e.g., a Blackberry ID). If the user of the first mobile device 102 has or switches to using a second mobile device 108 (e.g., also capable of communicating via NFC) in association with the user's identification, the example server 106 of FIG. 1 may provide the trust relationships associated with the user identification to the second mobile device 108. The shared key may then be calculated by the mobile device 108 upon receipt of the corresponding public key and identifier. In some examples, such as when there is a secure connection between the mobile devices 102, 108 and the server 106, the shared keys may also be included in the trust relationship with the sets of identifiers and public keys. The example second mobile device 108 may then establish secure NFC connections with the mobile device 104 without having to establish a new trust relationship at the time of the first NFC connection between the mobile devices 104 and 108. In some examples, the server 106 may be omitted and the mobile device 102 transfers trust relationships directly to the mobile device 108.

While the example system 100 of FIG. 1 includes close proximity communications between mobile devices 102, 104, 108, the example system 100 may include other types of devices. Furthermore, the example system 100 may be used to establish trust on first use for close proximity communications between types of devices other than mobile devices.

Block diagrams of apparatus and flowcharts representative of example processes that may be executed to implement some or all of the elements and devices described herein are described below and shown in the drawings. In these examples, the process represented by each flowchart may be implemented by one or more programs comprising machine readable instructions for execution by a processor or controller, such as shown in FIG. 2, and/or any other suitable device.

The one or more programs may be embodied in software or software instructions stored on a tangible storage medium such as, for example, a flash memory, a CD-ROM, a hard drive, a DVD, or a memory associated with a processor, but the entire program or programs and/or portions thereof could alternatively be executed by a device other than the microprocessor and/or embodied in firmware or dedicated hardware (e.g., implemented by an application specific integrated circuit (ASIC), a programmable logic device (PLD), a field programmable logic device (FPLD), discrete logic, etc.). For example, any one, some or all of the example mobile device components could be implemented by any combination of software, hardware, and/or firmware. Also, some or all of the methods represented by the flowcharts may be implemented manually. As used herein, the term tangible computer readable storage medium is expressly defined to include any type of computer readable storage.

Additionally or alternatively, the example methods described herein may be implemented using coded instructions (e.g., computer readable instructions) stored on a non-transitory computer readable medium such as a hard disk drive, a flash memory, a read-only memory, a compact disk, a digital versatile disk, a cache, a random-access memory and/or any other storage media in which information is stored for any duration (e.g., for extended time periods, permanently, brief instances, for temporarily buffering, and/or for caching of the information). As used herein, the term non-transitory computer readable medium is expressly defined to include any type of computer readable medium.

FIG. 2 is a diagram of an example mobile device 200 for use in the system 100 of FIG. 1. The example mobile device 200 may implement any of the mobile devices 102, 104, 108 of FIG. 1. The example mobile device 200 of FIG. 2 includes a processor 202 that is connected to a close-proximity communication device, such as a close proximity communications module 204. In some examples, the close proximity communications module 204 is or includes an NFC module. The examples described below refer to the close proximity communications module 204 as an NFC module. However, other types of close proximity communications modules may implement the close proximity communications module 204.

The processor 202 may be implemented using any suitable microcontroller or microprocessor capable of executing instructions. Additionally, the processor 202 may include hardware implementations, such as application-specific integrated circuits (ASIC), programmable logic devices (PLDs), or any other suitable logic circuit(s) and/or device(s).

The NFC module 204 includes a memory 206 and an antenna 208. In one example, the NFC module 204 is implemented according to the International Standards Organization standard ISO 14443. Implementation according to other standards is possible. The memory 206 may store information related to the user of the mobile device 200, such as a public key for the mobile device 200 that may be transferred to another NFC-enabled communication device upon the NFC module 204 being interrogated. The information may be input into the memory 206 manually, via close-proximity communication (e.g., NFC), via scanning, or through any other suitable technique. In addition, the NFC module 204 may receive public keys or other authentication information (e.g., from other mobile devices). The received public keys may be stored in the memory 206 of the NFC module 204 and/or in a storage 210 in the mobile device 200, and/or may be transferred to one or more data stores (e.g., the server 106 of FIG. 1) across a network. While the close-proximity communication device is described as being an NFC module 204, other types of close-proximity communication devices may be utilized instead of, or in addition to, the NFC module 204. In some examples, the NFC module 204 interfaces with the storage 210 and/or does not include the memory 206.

The NFC module 204 may store information (e.g., credentials) or may store pointers to information that may be retrieved over the network by the processor 202 via a Bluetooth interface 212 and/or via a network interface 214. In some examples, all of the information may be stored across a network, and/or the NFC module 204 may store information and may store pointers to information.

The network interface 214 may be implemented using any wired or wireless communication interface. For example, the network interface 214 may be implemented using an Ethernet connection, or any other wired connection. Alternatively, the network interface 214 may be implemented using a WiFi interface, a cellular modem, which may be a second generation (2G) and/or third generation (3G) and/or fourth generation (4G) cellular modem, or the like, and/or any other wireless network interface. Although shown as having a single network interface 214 the mobile device 102 may include several different network interfaces using one or more different wireless access technologies.

The example mobile device 200 of FIG. 2 further includes a user interface 216. The example user interface 216 may include hardware and/or software to enable a user of the mobile device 200 to interface with the processor 202. For example, the user interface 216 may include a display screen and a keyboard and/or any other suitable input device, such as a touch-screen. The user interface 216 allows a user to receive information and/or prompts, such as requests to verify that a mobile device to be paired is trusted, that are produced by the processor 202. The user interface 216 also enables the user to provide information, such as text, button selections, and/or any other suitable input, to the processor 202.

When the example mobile device 200 is to establish a secure NFC connection with another mobile device (e.g., the mobile device 104 of FIG. 1), the users of the mobile devices to be securely connected "tap" the mobile devices together. For example, the tap may include positioning the antennas 208 of the NFC modules 204 in adjacent positions (e.g., such that the mobile devices 200 touch or nearly touch). When the tap occurs, the NFC module 204 detects the opposite NFC module (e.g., of the mobile device 104). To establish the secure connection, the example NFC module 204 transmits a public key (e.g., public key A) to the other NFC module via the antenna 208. When a secure NFC connection has been established, the NFC module 204 transmits and receives data encrypted using a shared key.

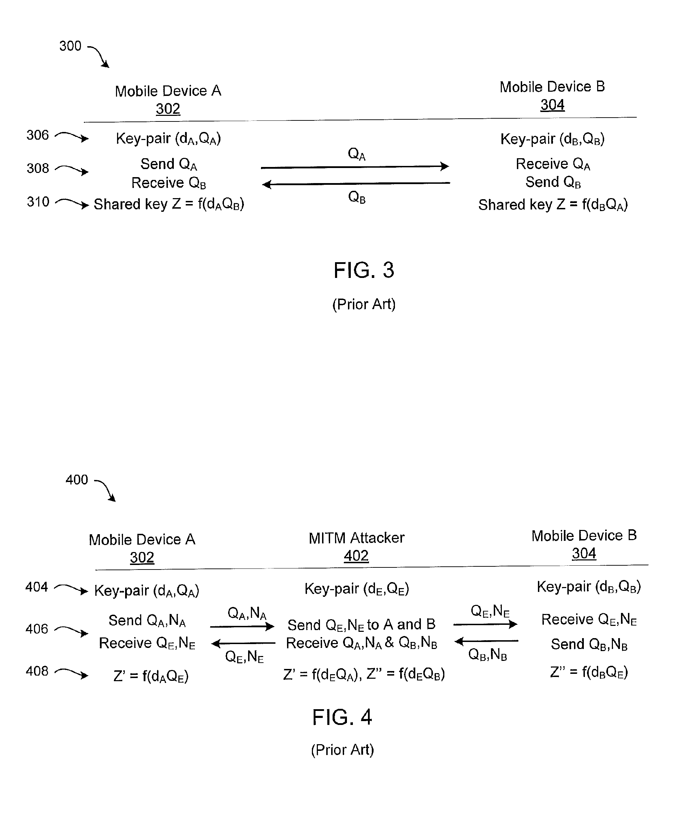

FIG. 3 illustrates a known process 300 for establishing near field communications. The process 300 uses the Diffie-Hellman key exchange method to exchange cryptographic keys according to the ECMA 386 specification. The process is performed by two mobile devices 302, 304 (e.g., the mobile devices 102, 104, 108, 200 of FIGS. 1 and/or 2). Each of the mobile devices 302, 304 has a private key/public key pair 306 (e.g., a pair of keys including a public key and a private lcey). The devices 302, 304 exchange 308 the public key portions of the private key/public key pair. Using the received public key portion and their own respective private key portions, the mobile devices 302, 304 are then able to calculate 310 a common shared key Z. The common shared key Z is then used to exchange encrypted data.

The process 300 of FIG. 3 is potentially vulnerable to a man-in-the-middle attack. FIG. 4 illustrates a man-in-the-middle (MITM) attack 400 by which the security of the process of FIG. 3 may be compromised. In addition to the mobile devices 302, 304 of FIG. 3, the process of FIG. 4 further includes a MITM attacker 402. The attacker 402 is capable of communicating with both mobile devices 302, 304. The mobile devices 302, 304 and the attacker 402 each have a private key/public key pair 404.

The attacker 402 performs the MITM attack by intercepting 406 the transmissions of the public keys Q_{A} and Q_{B} between the mobile devices 302, 304, and substituting the attacker's key Q_{E} for the public keys of the mobile devices 302, 304. After the exchange, the mobile devices 302, 304 do not share a common key (Z). Instead, the mobile device 302 shares a common key Z' with the attacker 402, while the mobile device 304 shares a different common key Z" with the attacker 402. While both mobile devices 302, 304 believe that they are communicating securely with each other, they are in fact both communicating securely with the attacker 402. The attacker 402 can now monitor or modify communications as desired.

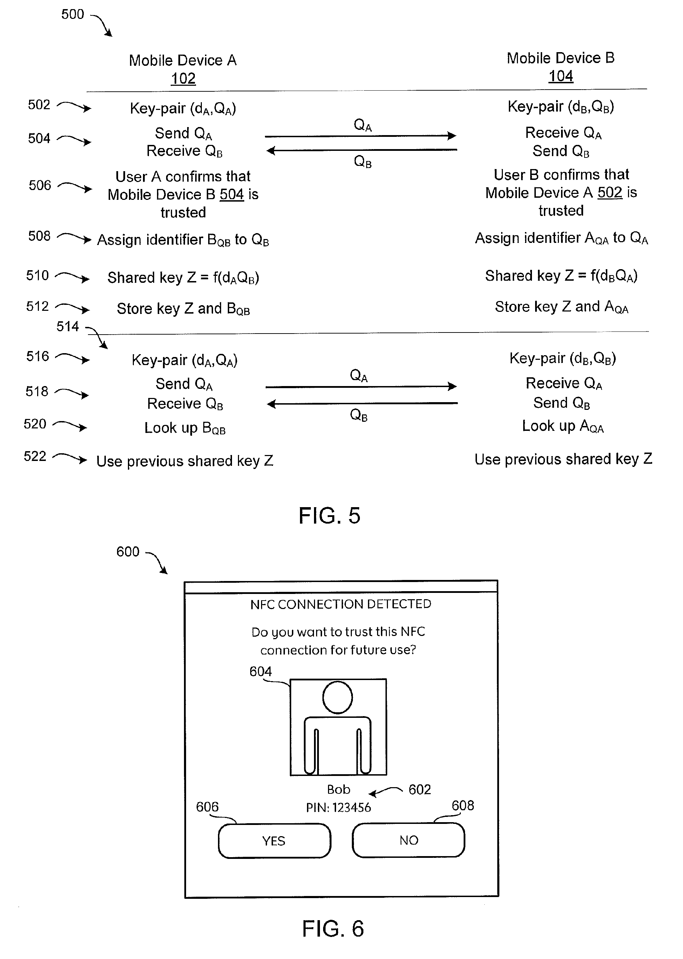

FIG. 5 illustrates an example process 500 for establishing trust for near field communications. The example process 500 is performed by the two example mobile devices 102, 104 of FIG. 1 when the mobile devices 102, 104 are "tapped" together (e.g., when NFC communications or any other close-proximity communications are established).

Each of the example mobile devices 102, 104 has a private key/public key pair 502. The devices 102, 104 exchange 504 the public key portions of the private key/public key pair. After exchanging the public keys, each of the example mobile devices 102, 104 obtains verification 506 (e.g., from their respective users, via user interfaces of the mobile devices 102, 104) that the other mobile device 102, 104 is trusted. For example, the mobile device 102 prompts a user of the mobile device 102 to confirm that the other mobile device 104, from which the mobile device 102 has received a public key, is trusted. For example, the mobile device 102 may display the name and/or other identifier of the user of the mobile device 104. The user may know that the other mobile device 104 is trusted because of the close-proximity nature of the NFC connection (e.g., she is standing next to the user of the device 104). Verification that the other mobile device is trusted may additionally or alternatively be accomplished using other methods.

When the users verify that the mobile devices 102, 104 are trusted, the example mobile devices 102, 104 assign identifiers to the public keys. For example, the mobile device 102 assigns an identifier B_{QB} to the mobile device 104. The identifier B_{QB} may be input by the user of the mobile device 102 and/or may be received from the mobile device 104 as a suggested identifier. Similarly, the example mobile device 104 assigns an identifier A_{QA} to the mobile device 102. In some examples, the mobile devices 102, 104 exchange suggested identifiers when exchanging the public keys Q_{A}, Q_{B}. In some examples, the public keys Q_{A}, Q_{B}, or a derivative of the public keys Q_{A}, Q_{B}, is used as the identifiers.

The suggested identifiers may then be used when prompting the respective users to verify that the mobile devices are trusted. FIG. 6 illustrates an example display interface 600 for verifying that a mobile device is trusted. The example display interface 600 may be implemented by the example user interface 216 of FIG. 2 and/or the example mobile devices 102, 200 of FIGS. 1 and/or 2. The display interface 600 displays a suggested identifier 602 for a mobile device (e.g., the mobile device 104). The example suggested identifier 602 includes a name of the user of the mobile device 104 (e.g., "Bob") and a unique identifier (e.g., a Blackberry user identifier, a personal identification number, a personal security number, "PIN: 123456," etc.). In the example of FIG. 6, the display interface 600 further displays a picture 604 received from the other mobile device 104 as a suggested identifier.

The example display interface 600 of FIG. 6 further includes buttons 606, 608 to verify or deny that the other mobile device 104 is trusted. If the other mobile device 104 is trusted to the user, the example user may select the button 606 to verify that the mobile device 104 is trusted. Alternatively, if the user does not trust the other mobile device 104 (e.g., the suggested identity is incorrect, an NFC connection was not intended, etc.), the user may select the button 608 to cause the mobile device 102 to deny the NFC transaction.

Other methods of verifying that the mobile device 104 is trusted via a display interface may be used. For example, the users of the mobile devices 102, 104 may be prompted to enter a common identification number or other agreed-upon key.

Returning to the example of FIG. 5, assuming the users of the mobile devices 102, 104 have verified that the opposite mobile devices are trusted, the mobile devices 102, 104 assign 508 respective identifiers to the received public keys. For example, the mobile device 102 assigns an identifier B_{QB} to the received public key Q_{B} and the mobile device 104 assigns an identifier A_{QA} to the received public key Q_{A}. In some examples, the assigned identifiers A_{QA} and/or B_{QB} are suggested identifiers provided (e.g., exchanged) with the public keys.

The example mobile devices 102, 104 calculate 510 the shared key Z based on the exchanged public keys Q_{A}, Q_{B} and the respective private keys d_{A}, d_{B}. The example mobile devices 102, 104 then store 512 the shared key Z in association with the identifier associated with the opposite mobile device 102, 104. For example, the mobile device 102 stores the shared key Z and the identifier B_{QB}. The stored key and the identifier may then be used for subsequent secure NFC connections between the mobile devices 102, 104. Additionally or alternatively, the stored key and the identifier may be used between the mobile device 102 and another mobile device associated with the user of the mobile device 104.

A subsequent secure NFC connection process 514 may be used between the two mobile devices 102, 104 that have previously established a secure NFC connection according to the example process 500. Unlike prior art processes, the secure NFC connection process 514 reduces (e.g., prevents) the possibility of a man-in-the-middle attack between the mobile devices 102, 104. The example subsequent secure NFC connection process 514 may be performed when the mobile devices 102, 104 are tapped together.

Each of the example mobile devices 102, 104 has a private key/public key pair 516. The devices 102, 104 exchange 518 the public key portions of the private key/public key pair. The example mobile devices 102, 104 look up 520 the identifiers (e.g., stored during the first secure NFC transaction) based on the received public key. For example, the mobile device 102 looks up the identifier B_{QB} based on the public key Q_{B}. Similarly, the mobile device 102 looks up the identifier A_{QA} based on the public key Q_{A}. When the mobile devices 102, 104 have determined the identifiers, the mobile devices 102, 104 determine that the other mobile device 102, 104 is trusted and a secure NFC connection may be established. The mobile devices 102, 104 then use 522 the shared key Z (e.g., previously stored during a first NFC connection between the mobile devices 102, 104) to securely communicate via NFC.

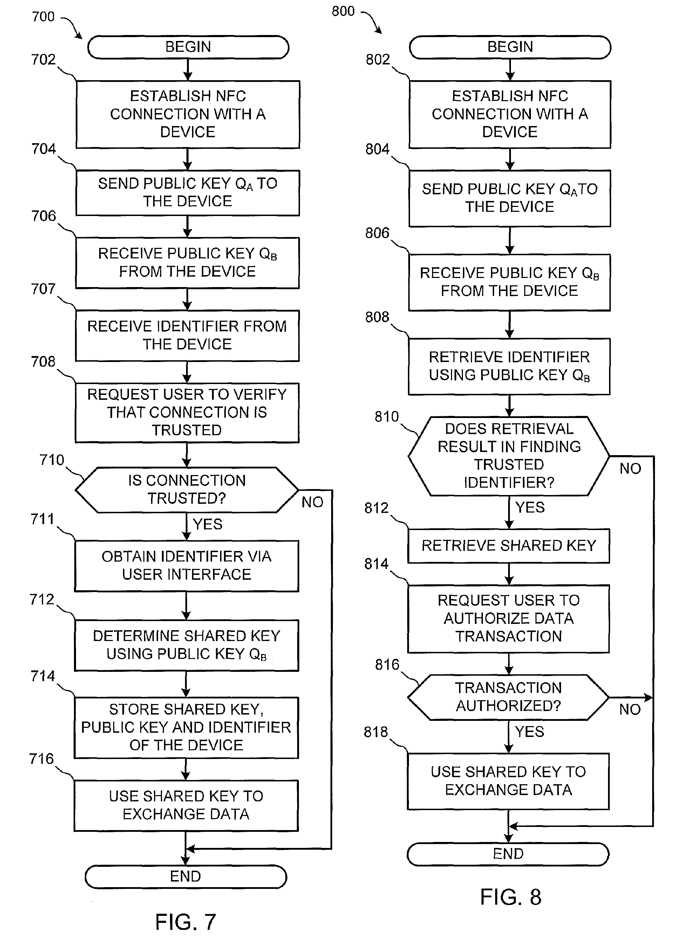

FIG. 7 is a flowchart representative of an example method 700 to establish trust on first use for near field communications. The example method 700 may be performed to implement any of the example mobile devices 102, 104, 108, 200 of FIGS. 1, 2, and/or 5. For clarity, the method 700 will be described below with reference to the mobile devices 102 and 200 of FIGS. 1 and 2.

The method of FIG. 7 establishes (and/or initiates establishment of) a close proximity communications (e.g., NFC) connection (e.g., via the close proximity communications module 204 of FIG. 2, via an NFC module) with another device (e.g., the mobile device 104 of FIG. 1, a desktop computer, a notebook computer, a tablet computer, or any other type(s) of devices) (block 702). The NFC connection may be established when the mobile device 102 is tapped to the mobile device 104 such that the respective NFC modules 204 of the mobile devices 102, 104 are communicatively coupled. The example mobile device 102 sends (e.g., via the NFC module 204) a public key (e.g., Q_{A}) to the mobile device 104 (block 704). The example mobile device 102 also receives a public key (e.g., Q_{B}) from the mobile device 104 (block 706). In some examples, the mobile device 102 obtains (e.g., receives) an identifier from the mobile device 104 (block 707).

The example mobile device 102 requests a user to verify that the NFC connection is trusted (block 708). For example, the mobile device 102 may display a message to the user via the user interface 216 of FIG. 2 requesting the user to input (e.g., press a button) an indication of whether the mobile device 104 from which the public key was received is trusted. If an identifier was received from the mobile device 104 (block 707), the example mobile device 102 may display the identifier to the user as part of the request. If the connection is trusted (block 710), the example mobile device 102 determines a shared key based on the received public key (e.g., Q_{B}) (block 712). For example, the processor 202 of FIG. 2 may calculate the shared key (e.g., Z) using the public key Q_{B} received from the mobile device 104 and a private (e.g., secret) key (e.g., d_{A}). In some examples (e.g., when an identifier is not received from the mobile device 104 as in block 707), when the user verifies that the connection is trusted (block 710) the mobile device 102 obtains an identifier for the mobile device 104 via the user interface 216 (block 711).

The example mobile device 102 stores the public key (e.g., Q_{B}), the shared key (e.g., Z), and the identifier of the mobile device 104 (e.g., B_{QB}) (block 714). For example, the mobile device 102 stores the shared key and the identifier in the memory 206 and/or the storage 210 of FIG. 2. Additionally or alternatively, the mobile device 102 may store the shared key and the identifier at the server 106 (e.g., in association with the user), which may then be provided to another mobile device (e.g., the mobile device 108). The example mobile device 102 uses the shared key Z to exchange data with the other mobile device 104 (e.g., via the NFC module 204) (block 716).

If the connection is not trusted (e.g., based on the user input via the user interface 216) (block 710), the example mobile device 102 may skip blocks 712-716 because the NFC connection may not be secure. The example method 700 may then end and/or iterate for an NFC connection with a different mobile device.

FIG. 8 is a flowchart representative of an example method 800 to establish near field communications after trust has been established between two devices. The example method 800 may be performed to implement any of the example mobile devices 102, 104, 108, 200 of FIGS. 1, 2, and/or 5 and/or any other type of device. For clarity, the method 800 will be described below with reference to the mobile devices 102 and 200 of FIGS. 1 and 2.

The example method 800 begins when the mobile device 102 establishes (and/or initiates establishment of) a close proximity communications connection with another device (e.g., the mobile device 104 of FIG. 1) (block 802). The NFC connection may be established when the mobile device 102 is tapped to the mobile device 104 such that the respective NFC modules 204 of the mobile devices 102, 104 are communicatively coupled. The example mobile device 102 sends (e.g., via the NFC module 204) a public key (e.g., Q_{A}) to the mobile device 104 (block 804). The example mobile device 102 also receives a public key (e.g., Q_{B}) from the mobile device 104 (block 806).

The example mobile device 102 retrieves (e.g., from the storage 210 of FIG. 2) an identifier based on the received public key Q_{B} (block 808). If performed after performing the example method 700 of FIG. 7 described above, the retrieval based on the public key Q_{B} results in an identifier B_{QB}. In some examples, the retrieval includes performing a look up based on the received public key Q_{B}. Additionally, successfully retrieving an identifier based on a received public key Q_{B} may serve as verification that the identifier is associated with a trusted NFC connection or a trusted device. In some other examples, the example mobile device 102 receives the identifier from the mobile device 104 and retrieves the public key Q_{B} from the storage 210 based on the identifier.

If the retrieval results in finding a trusted identifier (block 810), the example mobile device 102 retrieves a shared key (e.g., Z) (block 812) that is stored in association with the stored identifier and/or the stored public key. For example, the shared key may have been stored as a result of establishing trust on first use for an earlier NFC connection between the mobile devices 102, 104. Alternatively, the shared key may be computed on every instance of establishment of a connection.

At this time, the example mobile devices 102, 104 may establish a secure NFC connection. However, the trust between the mobile devices 102, 104 does not necessarily extend to every type of data transaction being performed by the mobile devices 102, 104. Accordingly, the example mobile device 102 may request a user of the mobile device to authorize a data transaction (block 814). For example, the mobile device 102 may request and receive permission via the user interface 216 to perform a data transaction (e.g., a particular type of data transaction). If the transaction is authorized by the user (e.g., via the user interface 216) (block 816), the example mobile device 102 uses the shared key Z to exchange data (block 818). The example method 800 may then end and/or iterate to perform another data transaction.

If the look up does not result in finding an identifier (block 810), the example mobile device 102 does not perform blocks 812-818 (e.g., does not establish an NFC connection or exchange data). If the data transaction is not authorized (block 816), the example mobile device 102 does not exchange data. In some examples, the mobile devices 102, 104 may treat the NFC connection as a first NFC connection with no prior trust.

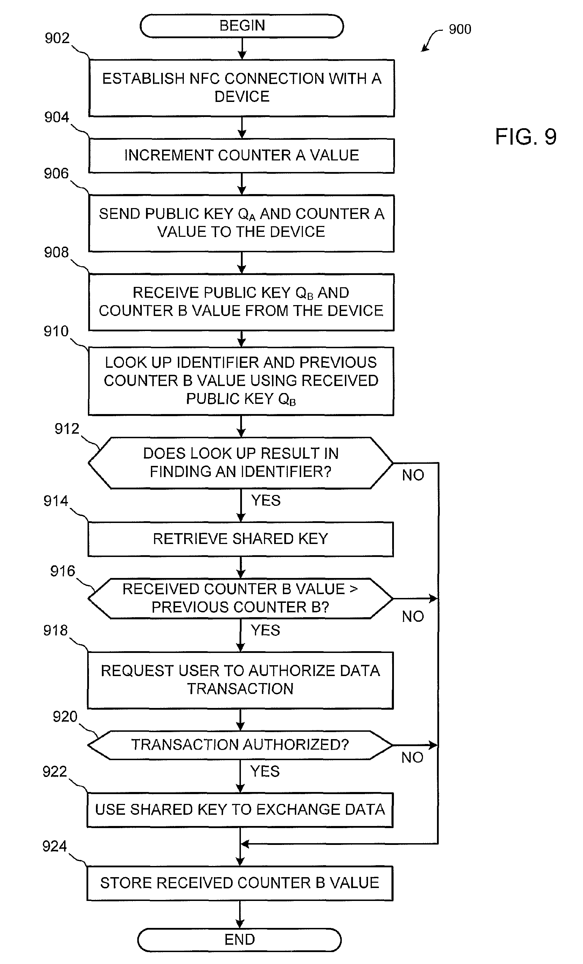

FIG. 9 is a flowchart representative of another example method 900 to establish near field communications after trust has been established between two devices. The example method 900 may be performed to implement any of the example mobile devices 102, 104, 108, 200 of FIGS. 1, 2, and/or 5. For clarity, the method 900 will be described below with reference to the mobile devices 102 and 200 of FIGS. 1 and 2. In contrast to the example method 800 of FIG. 8, the method 900 of FIG. 9 reduces the risk of (e.g., prevents) replay attacks in which an attacker attempts to duplicate a data transaction with a trusted party using the same data transmissions.

The example method 900 begins when the mobile device 102 establishes (and/or initiates establishment of) an NFC connection with another mobile device (e.g., the mobile device 104 of FIG. 1) (block 902). The NFC connection may be established when the mobile device 102 is tapped to the mobile device 104 such that the respective NFC modules 204 of the mobile devices 102, 104 are communicatively coupled. The example mobile device 102 stores a counter value A associated with the mobile device 102 (block 904). The example counter value A for the mobile device 102 indicates a number of an NFC connection such that the counter value A increases for each NFC connection. In some examples, the mobile device 102 maintains a counter value for each trusted NFC connection with a mobile device.

The example mobile device 102 sends (e.g., via the NFC module 204) a public key (e.g., Q_{A}) and the counter value A to the mobile device 104 (block 906). The example mobile device 102 also receives a public key (e.g., Q_{B}) and a counter value B from the mobile device 104 (block 908). The example mobile device 102 looks up (e.g., retrieves from the storage 210 of FIG. 2) an identifier and a previous counter value B based on the received public key Q_{B} (block 910). If performed after performing the example method 700 of FIG. 7 described above, the look up based on the public key Q_{B} results in an identifier B_{QB}. The previous counter value B may stored in the example storage 210 in association with the received public key Q_{B}.

If the look up results in finding an identifier (block 912), the example mobile device 102 retrieves a shared key (e.g., Z) (block 914) that is stored in association with the stored identifier B_{QB} and/or the stored public key Q_{B}. The example mobile device 102 determines whether the received counter value B is greater than the previous counter value B (block 916). In the example of FIG. 9, the counter value B is incremented (or otherwise increased) for each NFC data transaction. In some examples, the mobile device 102 may determine whether the counter value B is indicative of a replay attack or a genuine data transaction using a different method.

If the received value of counter B (e.g., X+1) is greater than the previous value of counter B (e.g., X) (block 916), the example mobile device 102 optionally requests the user to authorize the data transaction (block 918). For example, the mobile device 102 may request and receive permission via the user interface 216 to perform a data transaction (e.g., a particular type of data transaction). If the transaction is authorized (e.g., by the user via the user interface 216) (block 920), the example mobile device 102 uses the shared key Z to exchange data (block 922). The updated (e.g., incremented) value of counter B (e.g., X+1) may be stored as the value of the counter B (block 924) for use in future transactions to authenticate the transactions. The example method 900 may then end and/or iterate to perform another data transaction.

If the look up does not result in finding an identifier (block 912), the example mobile device 102 does not perform blocks 914-922 (e.g., does not establish an NFC connection or exchange data). If the received counter value B is not greater than the previous counter value B (block 916), the example mobile device 102 cancels the data transaction (e.g., does not prompt the user to go forward with the data transaction). If the data transaction is not authorized (block 920), the example mobile device 102 does not exchange data.

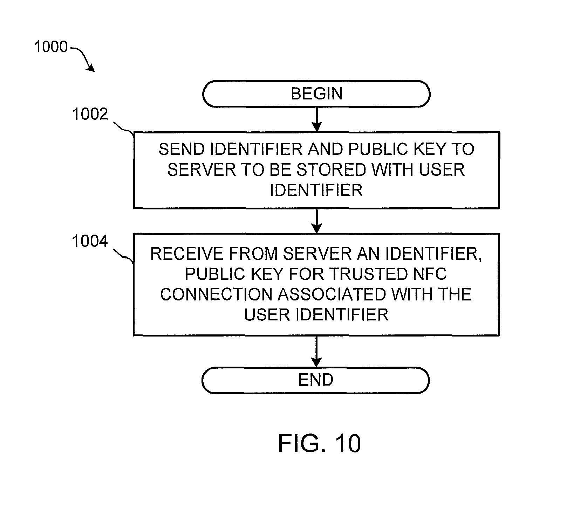

FIG. 10 is a flowchart representative of an example method 1000 to send and receive trusted connections to and from a server. The example method 1000 may be performed to implement any of the example mobile devices 102, 104, 108, 200 of FIGS. 1, 2, and/or 5. For clarity, the method 1000 will be described below with reference to the mobile devices 102 and 200 of FIGS. 1 and 2.

The example method 1000 sends (e.g., via the network interface 214 of FIG. 2) an identifier and a public key to a server (e.g., the server 106 of FIG. 1) to be stored with a user identifier (block 1002). The user identifier may be a unique identifier for the user of the mobile device 102. In combination, the identifier and the public key represent a trusted NFC connection or a trusted device. In some examples, such as when there is a secure connection between the mobile device 102 and the server 106, the mobile device 102 sends the shared key associated with the identifier and the public key.

The example mobile device 102 receives from the server 106 a (different) identifier and a public key for a trusted NFC connection associated with the user identifier (block 1004). For example, the received identifier and public key may represent a trusted connection made by the user using a different mobile device. The received identifier, public key, and shared key may be used to establish secure NFC connections without the user verifying that the connection is trusted. In some examples, such as when there is a secure connection between the mobile device 102 and the server 106, the mobile device 102 receives the shared key associated with the received identifier and public key.

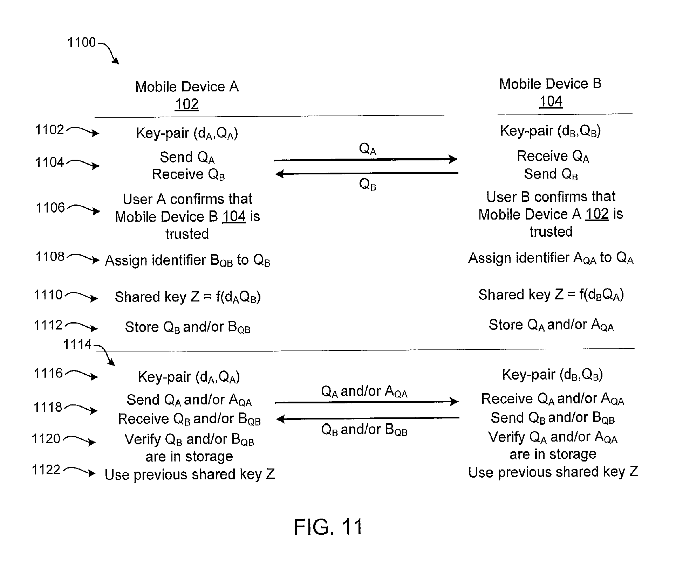

FIG. 11 illustrates an example process 1100 for establishing trust for near field communications. The example process 1100 is performed by the two example mobile devices 102, 104 of FIG. 1 when the mobile devices 102, 104 are "tapped" together (e.g., when NFC communications or any other close-proximity communications are established).

Each of the example mobile devices 102, 104 has a private key/public key pair 1102. The devices 102, 104 exchange 1104 the public key portions of the private key/public key pair. After exchanging the public keys, each of the example mobile devices 102, 104 obtains verification 1106 (e.g., from their respective users, via user interfaces of the mobile devices 102, 104) that the other mobile device 102, 104 is trusted. For example, the mobile device 102 prompts a user of the mobile device 102 to confirm that the other mobile device 104, from which the mobile device 102 has received a public key, is trusted. For example, the mobile device 102 may display the name and/or other identifier of the user of the mobile device 104. The user may know that the other mobile device 104 is trusted because of the close-proximity nature of the NFC connection (e.g., she is standing next to the user of the device 104).

When the users verify that the mobile devices 102, 104 are trusted, the example mobile devices 102, 104 assign identifiers to the public keys. For example, the mobile device 102 assigns an identifier B_{QB} to the mobile device 104. The identifier B_{QB} may be input by the user of the mobile device 102 and/or may be received from the mobile device 104 as a suggested identifier. Similarly, the example mobile device 104 assigns an identifier A_{QA} to the mobile device 102. In some examples, the mobile devices 102, 104 exchange suggested identifiers when exchanging the public keys Q_{A}, Q_{B}.

The suggested identifiers may then be used when prompting the respective users to verify that the mobile devices are trusted. Assuming the users of the mobile devices 102, 104 have verified that the opposite mobile devices are trusted, the mobile devices 102, 104 assign 1108 respective identifiers to the received public keys. For example, the mobile device 102 assigns an identifier B_{QB} to the received public key Q_{B} and the mobile device 104 assigns an identifier A_{QA} to the received public key Q_{A}. In some examples, the assigned identifiers A_{QA} and/or B_{QB} are suggested identifiers provided (e.g., exchanged) with the public keys.

The example mobile devices 102, 104 calculate 1110 the shared key Z based on the exchanged public keys Q_{A}, Q_{B} and the respective private keys d_{A}, d_{B}. The example mobile devices 102, 104 then store 1112 the public key Q_{A}, Q_{B} and/or the identifier A_{QA}, B_{QB} in association the opposite mobile device 102, 104. For example, the mobile device 102 stores the public key Q_{B}. The public key Q_{B} may then be used for subsequent secure NFC connections between the mobile devices 102, 104. Additionally or alternatively, the public key Q_{B} may be used between the mobile device 102 and another mobile device associated with the user of the mobile device 104.

A subsequent secure NFC connection process 1114 may be used between the two mobile devices 102, 104 that have previously established a secure NFC connection according to the example process 1100. Unlike prior art processes, the secure NFC connection process 1114 reduces (e.g., prevents) the possibility of a man-in-the-middle attack between the mobile devices 102, 104. The example subsequent secure NFC connection process 1114 may be performed when the mobile devices 102, 104 are tapped together.

Each of the example mobile devices 102, 104 has a private key/public key pair 1116. The devices 102, 104 exchange 1118 the public key Q_{A}, Q_{B} portions of the private key/public key pair and/or the identifiers A_{QA}, B_{QB}. The example mobile devices 102, 104 verify that the received public keys Q_{A}, Q_{B} are in the respective storages. For example, the mobile device 102 verifies that the public key Q_{A} and/or the identifier A_{QA} are in its storage (e.g., the public key Q_{A} matches a public key in a stored table of trusted public keys, the identifier A_{QA} matches an identifier in a stored table of identifiers, or both). Similarly, the mobile device 102 verifies that the public key Q_{B} and/or the identifier B_{QB} are in its storage (e.g., the public key Q_{B} matches a public key in a stored table of trusted public keys, the identifier B_{QB} matches an identifier in a stored table of identifiers, or both). When the mobile devices 102, 104 have verified the public keys and/or the identifiers, the mobile devices 102, 104 determine that the other mobile device 102, 104 is trusted and a secure NFC connection may be established. The mobile devices 102, 104 then use 1122 the shared key Z (e.g., calculate the shared key Z from the public keys Q_{A}, Q_{B} and the private keys d_{A}, d_{B}) to securely communicate via NFC.

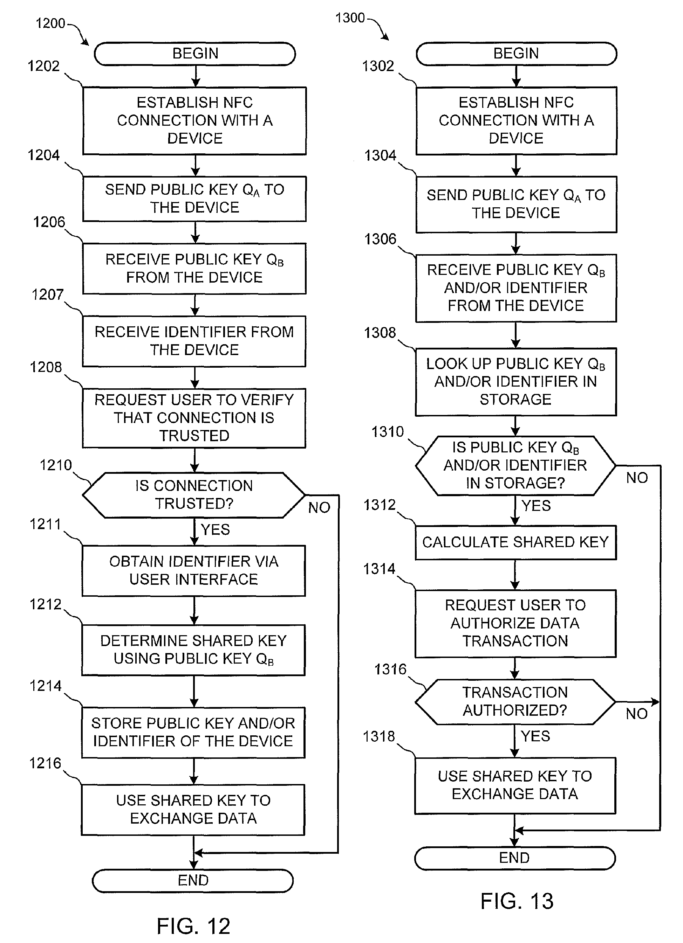

FIG. 12 is a flowchart representative of another example method 1200 to establish trust on first use for near field communications. The example method 1200 may be performed to implement any of the example mobile devices 102, 104, 108, 200 of FIGS. 1, 2, and/or 5. For clarity, the method 1200 will be described below with reference to the mobile devices 102 and 200 of FIGS. 1 and 2.

Example blocks 1202-1212 are substantially identical to respective blocks 702-712 of FIG. 7. The example mobile device 102 stores the public key (e.g., Q_{B}) and/or the identifier of the mobile device 104 (e.g., B_{QB}) (block 1214). For example, the mobile device 102 may store only the public key, only the identifier, or both the public key and the identifier, in the memory 206 and/or the storage 210 of FIG. 2. Additionally or alternatively, the mobile device 102 may store only the public key, only the identifier, or both the public key and the identifier at the server 106 (e.g., in association with the user), which may then be provided to another mobile device (e.g., the mobile device 108). The example mobile device 102 uses the shared key Z to exchange data with the other mobile device 104 (e.g., via the NFC module 204) (block 1216).

FIG. 13 is a flowchart representative of another example method 1300 to establish near field communications after trust has been established between two devices. The example method 1300 may be performed to implement any of the example mobile devices 102, 104, 108, 200 of FIGS. 1, 2, and/or 5 and/or any other type of device. For clarity, the method 1300 will be described below with reference to the mobile devices 102 and 200 of FIGS. 1 and 2.

Example blocks 1302 and 1304 are substantially identical to respective blocks 802 and 804 of FIG. 8. The example mobile device 102 receives a public key (e.g., Q_{B}) and/or an identifier (e.g., B_{QB}) from the mobile device 104 (block 1306). The mobile device 102 looks up the public key Q_{B} and/or the identifier in a storage (e.g., the storage 210 of FIG. 2) (block 1308). If the public key Q_{B} and/or the identifier are in the storage 210 (block 1310), the example mobile device 102 calculates a shared key (e.g., Z) (block 1312). In some examples, the mobile device calculates the shared key Z without user intervention, thereby increasing the speed of the subsequent transaction.

At this time, the example mobile devices 102, 104 may establish a secure NFC connection. However, the trust between the mobile devices 102, 104 does not necessarily extend to every type of data transaction being performed by the mobile devices 102, 104. Accordingly, the example mobile device 102 requests a user of the mobile device 102, 104 to authorize a data transaction (block 1314). For example, the mobile device 102 may request and receive permission via the user interface 216 to perform a data transaction (e.g., a particular type of data transaction). If the transaction is authorized by the user (e.g., via the user interface 216) (block 1316), the example mobile device 102 uses the shared key Z to exchange data (block 1318). The example method 1300 may then end and/or iterate to perform another data transaction.

If the public key QB and/or the identifier are not in the storage 210 (block 1310), the example mobile device 102 does not perform blocks 1312-1318 (e.g., does not establish an NFC connection or exchange data). If the data transaction is not authorized (block 1316), the example mobile device 102 does not exchange data. Instead, the example method 1300 may end and/or the mobile device 102, 104 may treat the NFC connection as a first NFC connection with no prior trust.

Although certain methods, apparatus, and articles of manufacture have been described herein, the scope of coverage of this patent is not limited thereto. To the contrary, this patent covers all methods, apparatus, and articles of manufacture falling within the scope of the claims.

## Claims

1. A method, comprising:
establishing a close proximity communications connection with a device;
receiving a public key from the device via the close proximity communications connection;
obtaining, via a user interface, an indication that the device is trusted; and
storing at least one of the public key or an identifier for the device.

2. A method as defined in claim 1, further comprising:
establishing a second close proximity communications connection with the device;
receiving the public key from the device via the second close proximity communications connection; and
obtaining a shared key based on the public key.

3. A method as defined in claim 2, wherein obtaining the shared key is based on the identifier.

4. A method as defined in claim 3, further comprising obtaining verification that the identifier is trusted.

5. A method as defined in claim 2, further comprising, prior to obtaining the shared key based on the public key, verifying that the public key is trusted by performing a lookup of the public key in a storage.

6. A method as defined in claim 1, wherein storing at least one of the public key or the identifier comprises storing the public key in association with the identifier.

7. A method as defined in claim 1, further comprising determining a shared key based on the public key in response to obtaining the indication.

8. A method as defined in claim 7, further comprising storing the shared key in association with the at least one of the public key or the identifier.

9. A method as defined in claim 1, further comprising obtaining the identifier via the user interface.

10. A method as defmed in claim 1, further comprising obtaining the identifier via the close proximity communications connection.

11. A method as defined in claim 1, further comprising:
sending the at least one of the identifier or the public key to a server; and
receiving at least one of a second identifier or a second public key from the server, the at least one of the second identifier or the second public key corresponding to a second trusted device.

12. A method as defined in claim 1, further comprising:
storing a first counter value associated with at least one of the identifier, a shared key, or the public key;
receiving a second counter value from the device;
comparing the first and second counter values;
performing a data transaction using the shared key based on the comparison; and
storing the second counter value in association with the at least one of the identifier, the shared key, or the public key.

13. A method as defined in claim 1, wherein the close proximity communications connection comprises a near field communications connection.

14. A method as defined in claim 1, wherein the device comprises a mobile device.

15. An apparatus, comprising:
a processor;
a close proximity communications module coupled to the processor; and
a memory coupled to the processor and storing instructions which, when executed by the processor, cause the processor to implement the method of any of the foregoing claims.

16. A tangible computer readable storage medium comprising machine readable instructions which, when executed by a processor, cause the processor to implement the methods or apparatus of any of the foregoing claims.
